**Europäisches Patentamt**

**European Patent Office**

**Office européen des brevets**

(19)

(11) Veröffentlichungsnummer: **0 337 272 B1**

# EUROPÄISCHE PATENTSCHRIFT

(12)

(45) Veröffentlichungstag der Patentschrift :
**26.06.91 Patentblatt 91/26**

(51) Int. Cl.⁵ : **F02C 7/36**, F02C 3/067,
F02K 3/06, F02K 3/072

(21) Anmeldenummer : **89105941.2**

(22) Anmeldetag : **05.04.89**

(54) **Propfan-Turbotriebwerk.**

(30) Priorität : **11.04.88 DE 3812027**

(43) Veröffentlichungstag der Anmeldung :
**18.10.89 Patentblatt 89/42**

(45) Bekanntmachung des Hinweises auf die
Patenterteilung :
**26.06.91 Patentblatt 91/26**

(84) Benannte Vertragsstaaten :
**DE ES FR GB IT SE**

(56) Entgegenhaltungen :
**FR-A- 2 152 466
GB-A- 2 194 292**

(56) Entgegenhaltungen :
**GB-A- 2 195 712
JOURNAL OF AIRCRAFT, Band 22, Nr. 4, April
1985, Seiten 296-302, New York, US; R.E. NEIT-
ZEL et al.: "Studies of convertible turboshaft/-
turbofan engines for high-speed rotorcraft"**

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Grieb, Hubert, Dr.
Nimrodstrasse 44
W-8034 Germering (DE)**
Erfinder : **Geidel, Helmut-Arnd
Wacholderweg 6
W-8047 Karlsfeld (DE)**

## Beschreibung

Die Erfindung betrifft ein Propfan-Turbotriebwerk gemäß dem Oberbegriff des Patentanspruchs 1.

Aus der GB-A-2 194 292 ist ein gattungsgemäßes Propfan-Turbotriebwerk bekannt geworden, bei dem ein sogenannter Booster (Mitteldruckverdichter) im Kerntriebwerk angeordnet ist. Dieser Mitteldruckverdichter ist gegenläufig ausgebildet, d.h., daß ein Teil der Schaufeln an der einen Welle angebracht ist, während die restlichen Schaufeln an der zweiten Welle angebracht sind. Dieser Mitteldruckverdichter ist stromauf eines Hochdruckverdichters angeordnet. Diese Anordnung hat den Nachteil, daß eine aerodynamisch günstige Auslegung des Mitteldruckverdichters schwierig ist, da die Schaufelreihen starr mit den Fanschaufeln gekoppelt sind, und eine optimale Anströmung der Fanschaufeln nicht notwendigerweise eine optimale Anströmung des Mitteldruckverdichters mit sich bringt.

Die FR-A-2 152 466 weist ein Fantriebwerk auf, bei dem der einstufige Fan von einer Niederdruckturbine über eine Welle angetrieben wird. Ein Mitteldruckverdichter ist über ein Getriebe ebenfalls an diese Welle angekoppelt. Diese Anordnung ist nicht ohne weiteres auf ein Gasturbinentriebwerk mit zwei entgegengesetzt rotierenden Fanrotoren übertragbar, die von einer gegenläufigen Turbine angetrieben werden, da in diesem Fall eine ungleiche Belastung der beiden Wellen erfolgen würde.

Hiervon ausgehend ist es Aufgabe der vorliegenden Erfindung, ein gattungsgemäßes Propfan-Turbotriebwerk derart zu verbessern, daß zum einen eine aerodynamisch optimale Einstellung des Mitteldruckverdichter-Arbeitspunktes erzielbar ist, wobei gleichzeitig eine möglichst gleichmäßige Belastung der beiden entgegengesetzt rotierenden Antriebswellen möglich ist.

Erfindungsgemäß wird diese Aufgabe durch die im Patentanspruch 1 angegebenen Merkmale gelöst.

Dies ermöglicht einerseits eine thermodynamisch günstige Festlegung der Gesamtverdichtung bei begrenztem Druckverhältnis des dem Mitteldruckverdichter nachfolgenden Hochdruckverdichters und andererseits eine im Vergleich zu bekannten 3-Wellen-Triebwerken mit 2-welligem Kerntriebwerk einen Antrieb des Mitteldruckverdichters ohne großen konstruktiven Aufwand.

Vorzugsweise ist das Getriebe als ein Planetengetriebe ausgebildet, wobei die äußere Propfanwelle mit einem Hohlrad verbunden ist, deren Planetenräder ortsfest angeordnet sind. Hierdurch wird eine platzsparende Übersetzung der relativ niedrigen Wellendrehzahlen auf die zum effektiven Verdichterbetrieb erforderlichen hohen Drehzahlen ermöglicht.

In alternativer Ausführung ist die äußere Propfanwelle mit Planetenrädern verbunden, und die Mitteldruckverdichterwelle mit einem Sonnenrad, wobei ein Hohlrad ortsfest angeordnet ist. Diese letzte Anordnung eignet sich besonders dann, wenn beim Mitteldruckverdichter eine wesentlich höhere Drehzahl als bei der äußeren Propfan-Welle gefordert ist.

In vorteilhafter Weiterbildung der Erfindung weisen die Propfanstufen zusammen ein Druckverhältnis zwischen 1,25 und 1,35 auf. Dies hat den Verteil, daß ebenso wie beim Propfan ohne Mantel mittels verstellbarer Laufschaufeln eine Schubumkehr auf einfache Weise erzielbar ist, und der Einbau eines aufwendigen und schweren mechanischen Schubumkehrers im Bypaßkanal des Turbotriebwerks entfallen kann. Zugleich ergibt sich dadurch ein besonders kurzer, strömungstechnisch vorteilhafter Fan-Mantel, sowie eine erhöhte Sicherheit gegen technische Störungen.

In alternativer Ausführung sind die Propfan-Schaufeln bei einem Druckverhältnis beider Rotoren über 1,4 ohne Verstellung ausgeführt, wobei dann allerdings im dahinterliegenden Nebenstromkanal bzw. im entsprechend verlängerten Propfan-Mantel ein konventioneller Schubumkehrer angeordnet werden muß.

Weiterhin von Vorteil ist, daß aufgrund der hier möglichen günstigen Zuordnung von Propfan und Turbinendurchmesser die Turbinen-Rotoren je nach Propfan-Druckverhältnis bzw. Verhältnis Propfan-Durchsatz/Triebwerksdurchsatz im technisch wichtigen Bereich jeweils zwischen 3 und 5 Schaufelkränze aufweisen. Dadurch wird bei geringer Baulänge und niedrigem Gewicht eine hohe spezifische Arbeit in der Arbeitsturbine umgesetzt, so daß ein großes Nebenstromverhältnis des Triebwerks erzielbar ist.

Die Erfindung ist nachfolgend anhand der beigefügten Zeichnung beispielhaft weiter erläutert. Dabei zeigt:

Fig. 1      eine teilgeschnittene Ansicht eines Propfan-Turbotriebwerkes,

Fig. 2      eine schematische Ansicht einer Ausführung des Mitteldruckverdichter-Getriebes mit Mitteldruckverdichter,

Fig. 3      eine schematische Ansicht einer alternativen Getriebeausführung.

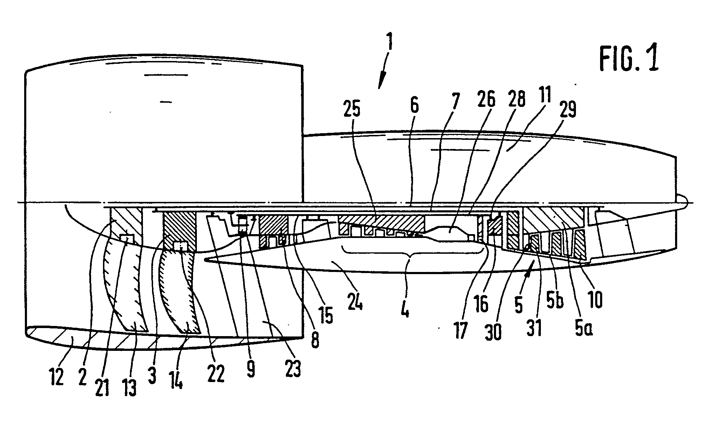

Das in Fig. 1 gezeigte Propfan-Turbotriebwerk 1 besteht aus einer Gasturbine 11 und zwei stromauf angeordneten Propfan-Rotoren 2,3, an denen über dem Umfang verteilte Propfanschaufeln 13, 14 angebracht sind. Die Propfanschaufeln 13, 14 sind über nicht näher dargestellte Verstellvorrichtungen 21, 22 verschwenkbar gelagert. Radial außerhalb der Profilschaufeln 13, 14 ist ein Mantel 12 vorgesehen, der sich in triebwerksaxialer

EP 0 337 272 B1

Richtung beidseitig der Propfanschaufel 13,14 erstreckt. Über eine Anzahl regelmäßig beabstandeter Rippen 23 ist der Mantel 12 am Außengehäuse 24 der Gasturbine 11 angebracht.

Die Gasturbine 11 besteht im wesentlichen aus einem Gaserzeuger 4, dem eine Arbeitsturbine 5 strömungsmäßig nachgeschaltet ist. Der Gaserzeuger 4 weist einen Hochdruckverdichter 25, eine Brennkammer 26 und eine Gaserzeugerturbine 17 auf, die über eine Hochdruckturbinenwelle 28 miteinander verbunden sind. Die Hochdruckturbinenwelle 28 ist im Turbinenabschnitt mittels eines Lagers 29 in einem im Außengehäuse 24 abgestützten als Leitschaufelring ausgebildeten Lagerträger 16 zusammen mit der Welle 7 gelagert.

Stromab des Leitschaufelringes 16 ist die aus zwei konzentrischen Turbinenrotoren 5a, 5b bestehenden Arbeitsturbine 5 angeordnet. Der innenliegende Turbinenrotor 5a ist an seinem Außenumfang mit drei Turbinenschaufelreihen 30 versehen, während der trommelartig ausgebildete äußere Turbinenrotor 5b an seinem Innenumfang mit vier Turbinenschaufelreihen 31 versehen ist. Dabei sind die Turbinenschaufelreihen 30 und 31 abwechselnd axial hintereinander angeordnet. Die beiden Turbinenrotoren 5a, 5b sind mit je einer Welle 6, 7 verbunden, wobei diese konzentrisch zueinander und konzentrisch innerhalb der Hochdruckturbinenwelle 28 durch den Gaserzeuger 4 nach vorn geführt werden. Die im Vorderteil des Turbotriebwerkes 1 angeordneten Propfan-Rotoren 2, 3 sind mit je einem der Wellen 6, 7 verbunden.

Die konzentrisch außenliegende Welle 7 ist über ein Getriebe 9 mit einer Hochdruckturbinenwelle 15 verbunden, die im wesentlichen koaxial vor der Hochdruckturbinenwelle 28 angeordnet ist. Um die zum Antrieb des auf der Mitteldruckverdichterwelle 15 befestigten Mitteldruckverdichters 8 erforderlich höhere Leistung bereitzustellen, ist der mit der Welle 7 gekoppelte Turbinenrotor 5b mit einer Turbinenschaufelreihe 10 mehr versehen als der innenliegende Turbinenrotor 5a.

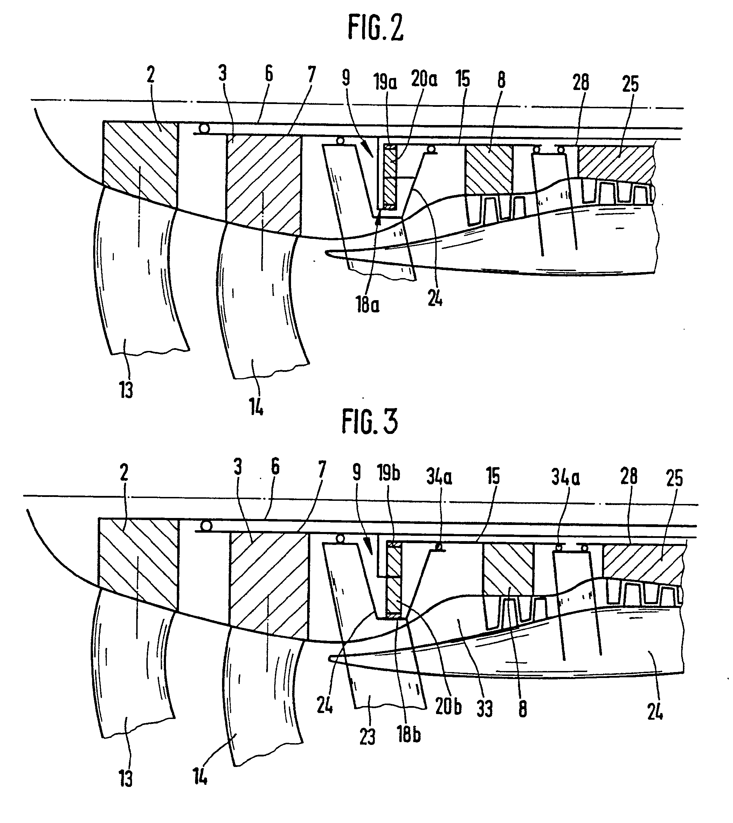

In Fig. 2 ist eine Ausführungsform des Getriebes 9 gemäß Fig. 1 schematisch gezeigt, bei der an der Welle 7 ein Hohlrad 18a angebracht ist. Eine Anzahl Planetenräder 20a, sind drehbar und ortsfest im Außengehäuse 24 angebracht, und stehen andererseits mit einem Zahnkranz 19a im Eingriff, wobei der Zahnkranz 33 auf der Mitteldruckverdichterwelle 15 angebracht ist. Hierdurch wird die Drehung der Welle 7 ins Schnelle übersetzend auf den Mitteldruckverdichter 8 übertragen.

Fig. 3 zeigt eine alternative Ausführungsform des Getriebes 9, bei der Planetenräder 20 an der Welle 7 befestigt sind und mit dieser umlaufen. Die Planetenräder 206 stehen einerseits mit einem ortsfest im Außengehäuse 24 abgestützten Zahnkranz 18b und andererseits mit einem Sonnenrad 19b im Eingriff. Das Sonnenrad 19b ist an der Mitteldruckverdichterwelle 15 angebracht, und treibt den Mitteldruckverdichter 8, wodurch die im Einlaufkanal 33 angesaugte Luft vor dem Hochdruckverdichter 25 vorverdichtet wird. die Mitteldruckverdichterwelle 15 ist über die Lager 34a, 34b im Außengehäuse 24 gelagert. Koaxial hinter der Mitteldruckverdichterwelle 15 ist die Hochdruckturbinenwelle 28 angeordnet, auf der neben dem Hochdruckverdichter 25 die in Fig. 1 gezeigte Hochdruckturbine 27 befestigt ist.

## Ansprüche

1. Propfan-Turbotriebwerk mit zwei entgegengesetzt drehenden Propfan-Rotoren und einer Gasturbine, die aus einem Gaserzeuger und einer Arbeitsturbine aufgebaut ist, wobei die Arbeitsturbine aus zwei gegenläufig mit Schaufeln bestückten Turbinenrotoren (5a,b) besteht, die mit zwei radial innerhalb des Gaserzeugers durch die Turbine geführten konzentrischen Wellen (6, 7) verbunden sind, und diese mit je einem der stromauf der Gasturbine (11) angeordneten, von einem Mantel (12) umgebenen Propfan-Rotoren (2, 3) verbunden sind, dadurch gekennzeichnet, daß ein auf einer Mitteldruckverdichterwelle (15) gelagerter Verdichterrotor (8) über ein Getriebe (9) mit der äußeren, den hinteren Propfanrotor (14) antreibenden Welle (7) gekoppelt ist, und der mit dieser Welle (7) gekoppelte erste Turbinenrotor (5b) ein Turbinengitter (10) mehr aufweist, als der zweite Turbinenrotor (5a).

2. Propfan-Turbotriebwerk nach Anspruch 1, dadurch gekennzeichnet, daß das Getriebe (9) als Planetengetriebe ausgebildet ist, wobei die Welle (7) mit einem Hohlrad (18a) verbunden ist, und die Mitteldruckverdichterwelle (15) mit einem Sonnenrad (19a) verbunden ist, während Planetenräder (20a) ortsfest angeordnet sind.

3. Propfan-Turbotriebwerk nach Anspruch 1, dadurch gekennzeichnet, daß das Getriebe (9) als Planetengetriebe ausgebildet ist, wobei die Welle (7) mit Planetenrädern (20b) verbunden ist, und die Mitteldruckverdichterwelle (15) mit einem Sonnenrad (19b) verbunden ist, wobei ein Hohlrad (18b) ortsfest angeordnet ist.

4. Propfan-Turbotriebwerk nach einem der Ansprüche 1 bis 3, dadurch gekennzeichnet, daß der Mitteldruckverdichter (8) zweistufig bis dreistufig entsprechend einem Druckverhältnis zwischen 1,5-2,5 ausgeführt ist.

5. Propfan-Turbotriebwerk nach Anspruch 1, dadurch gekennzeichnet, daß an den Propfan-Rotoren (2,3) Propfanschaufeln (13, 14) verstellbar ausgeführt sind und zusammen ein Druckverhältnis zwischen 1,25 und

3

1,35 aufweisen.

6. Propfan-Turbotriebwerk nach Anspruch 1, dadurch gekennzeichnet, daß die Propfanstufen (Rotoren 2, 3) mit nicht verstellbaren Schaufeln (13, 14) zusammen ein Druckverhältnis > 1,40 aufweisen.

7. Propfan-Turbotriebwerk nach Anspruch 1, dadurch gekennzeichnet, daß die Turbinenrotoren (5a, 5b) je drei bis fünf Schaufelkränze aufweisen.


## Claims

1. A prop-fan turbo-propulsion unit with two oppositely rotating prop-fan rotors and a gas turbine consisting of a gas generator and a working turbine, the working turbine consisting of two turbine rotors (5a, b) fitted with oppositely directed blades and which are connected to two concentric shafts (6, 7) which pass through the turbine radially within the gas generator, said shafts being each connected to one of tie prop-fan rotors (2, 3) enclosed by a casing (12) and disposed upstream of the gas turbine (11), characterised in that a compressor rotor (8) mounted on a medium-pressure compressor shaft (15) is coupled by a gear mechanism (9) to the outer shaft (7) which drives the rear prop-fan rotor (14), the first turbine rotor (5b) which is coupled to this shaft (7) comprising one more turbine nozzle (10) than the first turbine rotor (5a).

2. A prop-fan turbo-propulsion unit according to claim 1, characterised in that the gear mechanism (9) is constructed as a planetary gear mechanism, the shaft (7) being connected to a hollow wheel (18a) while the medium pressure compressor shaft (15) is connected to a sun wheel (19a) while planet wheels (20a) are disposed in stationary positions.

3. A prop-fan turbo-propulsion unit according to claim 1, characterised in that tie gear mechanism (9) is constructed as a planetary gear mechanism, the shaft (7) being connected to planet wheels (20b) while the medium pressure compressor shaft (15) is connected to a sun wheel (19b) while the hollow wheel (18b) is disposed in a stationary position.

4. A prop-fan turbo-propulsion unit according to one of claims 1 to 3, characterised in that the medium pressure compressor (8) is of two-stage to three-stage construction according to a pressure ratio of between 1.5-2.5.

5. A prop-fan turbo-propulsion unit according to claim 1, characterised in that adjustably constructed on the prop-fan rotors (2, 3) are prop-fan blades (13, 14) and they together have a pressure ratio of between 1.25 and 1.35.

6. A prop-fan turbo-propulsion unit according to claim 1, characterised in that the prop-fan stages (rotors 2, 3) with non-adjustable blades (13, 14) together have a pressure ratio which is greater than 1.40.

7. A prop-fan turbo-propulsion unit according to claim 1, characterised in that the turbine rotors (5a, 5b) each have three to five rings of blades.


## Revendications

1. Turboréacteur comprenant deux rotors tournant dans des directions opposées et une turbine à gaz, qui est constituée par un générateur de gaz et une turbine de travail, dont la turbine de travail comporte deux disques de turbines (5a, 5b) tournant en sens opposé équipés d'aubes, qui sont reliés par deux arbres concentriques (6, 7) guidés radialement à travers la turbine à l'intérieur du générateur de gaz, ceux-ci étant reliés respectivement à un des rotors (2, 3) entourés d'une enveloppe (12), et disposés en amont de la turbine à gaz (11), caractérisé en ce qu'un rotor compresseur (8) monté sur un arbre de compresseur à pression moyenne est accouplé au moyen d'un engrenage (9) avec l'arbre, extérieur (7) entraînant le rotor arrière (14) et en ce que le premier disque de turbine (5b) présente une grille de turbine de plus que le deuxième disque de turbine (5a).

2. Turboréacteur selon la revendication 1, caractérisé en ce que l'engrenage (9) est constitué par un engrenage planétaire, l'arbre (17) étant relié par une roue à denture intérieure et en ce que l'arbre de compresseur moyenne pression (15) est relié par une roue solaire (19a), tandis que les roues satellites (20a) sont disposées fixes.

3. Turboréacteur selon la revendication 1, caractérisé en ce que l'engrenage (9) est constitué par un engrenage planétaire, l'arbre (7) étant relié par des roues satellites (20b) et en ce que l'arbre de compresseur moyenne pression (15) est relié à une roue solaire (19b), une roue à denture intérieure (18b) étant disposée fixe.

4. Turboréacteur selon l'une des revendications 1 à 3, caractérisé en ce que le compresseur moyenne pression (8) est réalisé avec deux étages ou trois étages en fonction d'un rapport de compression compris entre 1,5 et 2,5.

5. Turboréacteur caractérisé en ce que sur les rotors (2, 3), les aubes (13, 14) sont exécutées avec possibilité de réglage et présentent ensemble un rapport de compression compris entre 1,25 et 1,35.

6. Turboréacteur selon la revendication 1, caractérisé en ce que les étages (rotors 2, 3) pourvus d'aubes (13, 14), non réglables présentent ensemble un rapport de compression > 1,40.

7. Turboréacteur selon la revendication 1, caractérisé en ce que les disques de turbines (5a, 5b) présentent respectivement trois à quatre couronnes d'aubes.

FIG. 1

## FIG.2

## FIG.3